# EUROPEAN PATENT APPLICATION

(11) **EP 2 096 593 A1**
(43) Date of publication of application: **02.09.2009**
(21) Application number: 09152458.7
(22) Date of filing: 10.02.2009
(51) Int. Cl.: G06Q 10/00

(54) **Information processing apparatus, information processing method, and information processing program**

(30) Priority: 29.02.2008 JP 2008051116
(71) Applicant: CANON KABUSHIKI KAISHA, Ohta-ku Tokyo (JP)
(72) Inventor: Hatakeyama, Yuki c/o CANON KABUSHIKI KAISHA, Tokyo 146-8501 (JP)
(74) Representative: TBK-Patent

(57) **Abstract**

An information processing apparatus that processes a digital document having a hierarchical structure through a workflow made up of at least one process, according to the order of the processes of the workflow. The apparatus includes a generation unit that generates structural elements that make up the digital document in association with the respective processes that make up the workflow; a storage unit that stores results of the processes that make up the workflow in the structural elements corresponding to the respective processes; and a referring unit that refers to the results of the respective processes stored by the storage unit, from the root of the hierarchical structure of the digital document.

## Description

### BACKGROUND OF THE INVENTION

### Field of the Invention

The present invention relates to an information processing apparatus that processes documents.

### Description of the Related Art

Work environments where documents are passed among several workers within a company, and work is carried out, are being broadly implemented in recent years. In such a work environment, it is often the case that the flow in which the documents are passed around is defined in advance, and a workflow system, which manages the flow of operations, is used. Various technologies have been disclosed with respect to such workflow systems.

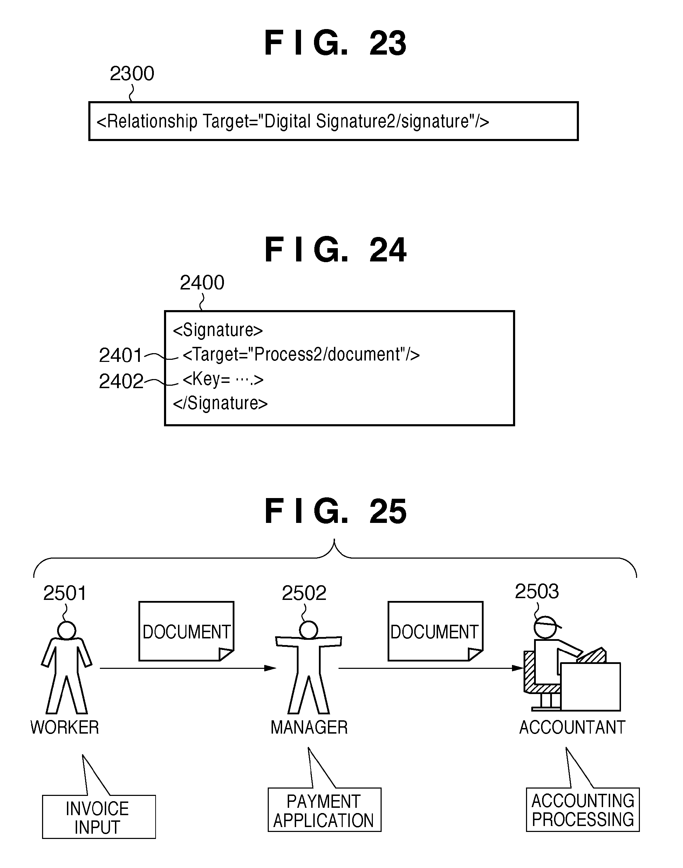

United States Patent No. 4,503,499 describes a workflow system in which a specific administrator defines a flow of operations as a workflow in advance, and work is carried out while passing around documents based on that workflow. Through this, the administrator can understand how far that work has progressed. Here, a workflow in which processes proceed from (1), to (2), to (3), and finally to (4) can be considered. If, in such a workflow, an error is discovered in the document upon reaching process (4) and it is deemed necessary to redo the workflow starting with process (2), it is necessary, conventionally, to recreate the document starting with process (1). To be more specific, consider an office workflow for passing around documents such as that shown in FIG. 25, where a worker raises an invoice, his/her manager approves the invoice, and the invoice is then settled by the accounting department. If, for example, in such a workflow, a digital document that is currently being passed around has been returned from accounting, document structure information and the like from the time the invoice was raised is lost, and the worker must therefore either redo the settings or raise the invoice once again.

If, in such a workflow, it is discovered that corrections are necessary after the final process has ended, it is desirable to be able to execute the process that requires correction on the document for which the final process has ended, rather than redoing the workflow from the first process. However, the stated United States Patent No. 4,503,499 makes no particular mention of a case where such a workflow, in which a document is altered, is restarted partway through.

In such a workflow, it is also desirable for it to be possible to print in differing formats, one for each process of the workflow, so that, for example, the worker prints using a document structure for raising an invoice, the manager prints using a document structure for approving the invoice, and accounting prints using a document structure for settling the invoice. In addition to printing, there are also cases where it is necessary for document structures to be saved for each process of the workflow. For example, the data of charts used by a medical institution is updated with timestamps and electronic signatures with each examination. Saving such data each time a chart is issued for an examination is necessary to ensure compliance with the e-Document Law.

Meanwhile, Japanese Patent Laid-Open No. 2002-278721 (and paragraph number 0018 in particular) describes a method in which job tickets specifying differing processing conditions are associated with images within an image set, and the images are processed based on the processing conditions indicated in the job tickets associated therewith. This method makes it possible to change the print settings for a print job in response to a job control event. However, this disclosure makes no particular mention of a case where a document is sequentially changed, as in a workflow system such as that described above.

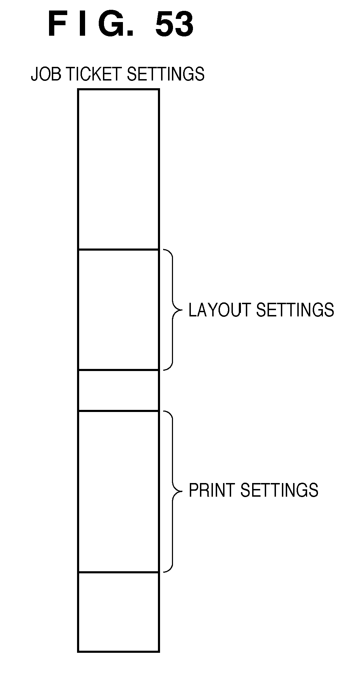

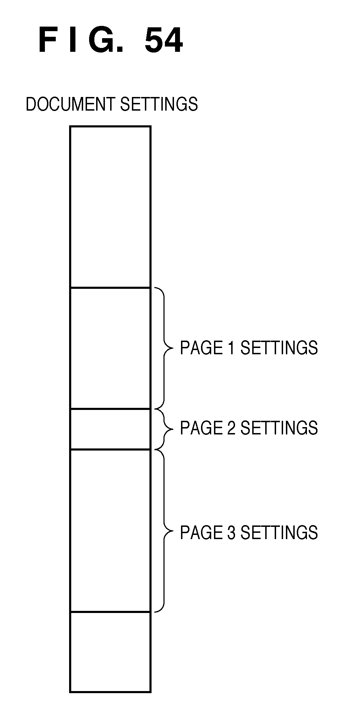

Finally, a case can be considered where, for example, a print job that is set for each process, such as "layout" and "printing", as indicated in FIG. 53, is then changed to a document format that consolidates the settings on a page-by-page basis, as shown in FIG. 54. Conventionally, information indicating what process is set for each page is left behind, but the setting information for each process in the overall document is lost. For this reason, operations for correcting a desired process cannot be performed on a document whose final process has ended, as in a workflow such as that described above.

### SUMMARY OF THE INVENTION

Aspects of the present invention relate to an information processing apparatus capable of holding data on a process-by-process basis and improving convenience when processing documents in a workflow.

According to an aspect of the present invention,

The present invention in its first aspect provides an information processing apparatus as specified in claims 1 to 7.

The present invention in its second aspect provides an information processing method as specified in claim 8.

Further features of the present invention will become apparent from the following description of exemplary embodiments with reference to the attached drawings.

### BRIEF DESCRIPTION OF THE DRAWINGS

FIG. 1 is a block diagram illustrating the overall configuration of a document processing system that includes the information processing apparatus according to an embodiment of the present invention.

FIG. 2 is a diagram illustrating the module configuration of an application 200 for generating a document to be passed among clients in the system indicated in FIG. 1.

FIG. 3 is a flowchart illustrating an outline of a procedure by which the application 200 indicated in FIG. 2 generates a digital document.

FIG. 4 is a diagram illustrating an example of a process list window.

FIG. 5 is a diagram illustrating an example of a process definition window.

FIG. 6 is a diagram illustrating the structure of a digital document generated according to a first embodiment.

FIG. 7 is a diagram illustrating an example of the content of a relation file according to the first embodiment.

FIG. 8 is a flowchart illustrating a procedure for processing that advances processes in a workflow.

FIG. 9 is another diagram illustrating the module configuration of the application 200.

FIG. 10 is a diagram illustrating an example of a process confirmation window displayed for a user.

FIG. 11 is a diagram illustrating an example of a toolbar.

FIG. 12 is a diagram illustrating an example in which a toolbar 1201 for managing workflow processes is plugged in to existing document editing software 1200.

FIG. 13 is a diagram illustrating the structure of a digital document in the case where the addition of a snapshot is set to "on", according to a second embodiment.

FIG. 14 is a diagram illustrating an example of the content of a relation file according to the second embodiment.

FIG. 15 is a diagram illustrating an example of thumbnails in a document snapshot.

FIG. 16 is a diagram illustrating the structure of a digital document in the case where items in operational attributes 504 are ticked and attributes are set, according to a third embodiment.

FIG. 17 is a diagram illustrating an example of content written in an attribute file.

FIG. 18 is a diagram illustrating the structure of a digital document in the case where print settings have been made for each process in a workflow, according to a fourth embodiment.

FIG. 19 is a diagram illustrating an example of content written in a job ticket.

FIG. 20 is a diagram illustrating the structure of a digital document that has a file corresponding to the process list indicated in FIG. 4, according to a fifth embodiment.

FIG. 21 is a diagram illustrating an example of content written in a workflow file.

FIG. 22 is a diagram illustrating the structure of a digital document in the case where an electronic signature has been given to a document in each process, according to a sixth embodiment.

FIG. 23 is a diagram illustrating an example of the content of a relation file in the structure indicated in FIG. 22.

FIG. 24 is a diagram illustrating an example of content written in an electronic signature file.

FIG. 25 is an example that applies the digital document according to the first embodiment.

FIG. 26 is a diagram illustrating the structure of a digital document created according to an embodiment.

FIG. 27 is a diagram illustrating an example of the content of a relation file according to an embodiment.

FIG. 28 is a diagram illustrating setting information for a hot folder held by hot folder management software.

FIG. 29 is a diagram illustrating the structure of a digital document 2600 when the process has been advanced to the storage of that digital document in order to submit a payment application form to a manager.

FIG. 30 is a diagram illustrating another example of the content of a relation file according to an embodiment.

FIG. 31 is a diagram illustrating an example of an updated document.

FIG. 32 is a diagram illustrating the structure of a digital document when the process has been advanced to an accounting process.

FIG. 33 is a diagram illustrating another example of the content of a relation file according to an embodiment.

FIG. 34 is a diagram illustrating an example that applies the digital document according to the first through sixth embodiments.

FIG. 35 is a diagram illustrating the module configuration of hot folder management software used in FIG. 34.

FIG. 36 is a diagram illustrating an example of a user interface window used for making hot folder settings.

FIG. 37 is a diagram illustrating setting information for a hot folder held by hot folder management software.

FIG. 38 is a flowchart illustrating a procedure performed when a document is placed in a hot folder.

FIG. 39 is an example that applies the digital document according to the fourth embodiment.

FIG. 40 is a diagram illustrating the module configuration of process conversion software indicated in FIG. 39.

FIG. 41 is a flowchart illustrating a procedure for processing by which process conversion software generates a digital document.

FIG. 42 is a diagram illustrating an example of content written in a job ticket placed in a hot folder.

FIG. 43 is a diagram illustrating the content of instructions for a layout process indicated by a tag 4201.

FIG. 44 is a diagram illustrating the content of instructions for a process indicated by a tag 4202.

FIG. 45 is a diagram illustrating the structure of a digital document 3904 generated by process conversion software 3903.

FIG. 46 is a diagram illustrating an example of content written in a structural element 4506 (a job ticket).

FIG. 47 is a diagram illustrating an example of content written in a structural element 4508 (a job ticket).

FIG. 48 is a diagram illustrating an example of the content of a relation file according to an embodiment.

FIG. 49 is an example that applies the digital document according to the sixth embodiment.

FIG. 50 is a diagram illustrating an example of content written in a structural element 4905 (an electronic signature file).

FIG. 51 is a diagram illustrating an example of content written in a structural element 4907 (an electronic signature file).

FIG. 52 is a diagram illustrating an example of the content written in a relation file according to an embodiment.

FIG. 53 is a diagram illustrating an example of a print job that is set for each process, such as "layout" and "printing", according to conventional art.

FIG. 54 is a diagram illustrating an example in which a print job as indicated in FIG. 53 has been changed to a document format that consolidates the settings on a page-by-page basis.

FIG. 55 is a diagram illustrating an example of the configuration of a host computer indicated in FIG. 1.

### DESCRIPTION OF THE EMBODIMENTS

Hereinafter, embodiments of the present invention shall be described with reference to the drawings. Note that identical constituent elements shall be given identical reference numerals, and descriptions thereof shall be omitted. An embodiment of the present invention shall now be described.

### <System Configuration>

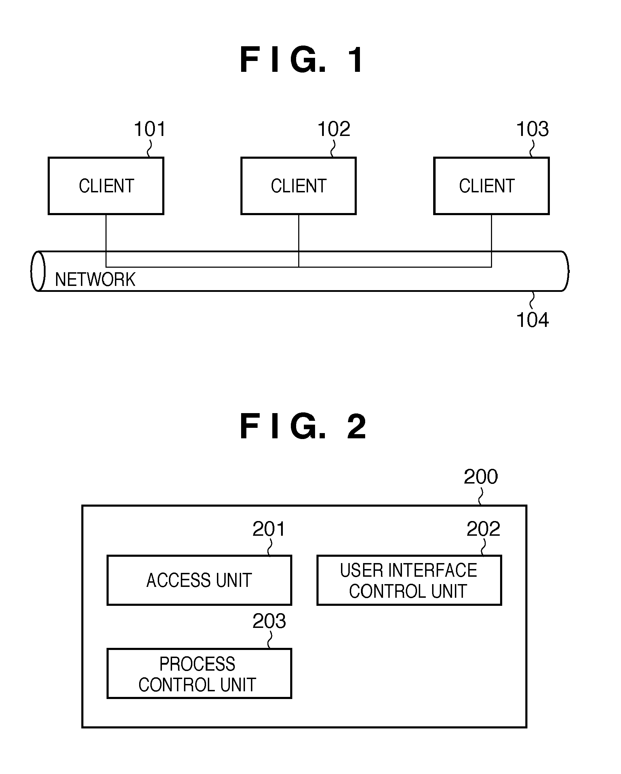

FIG. 1 is a block diagram illustrating the overall configuration of a document processing system that includes the information processing apparatus according to an embodiment of the present invention.
In this document processing system, clients 101 to 103, serving as information processing apparatuses, are connected to one another via a network 104. With the configuration illustrated in FIG. 1, documents are processed according to a process (processing step) order in a workflow of operations. Documents are processed while, for example, being passed among the clients 101 to 103 shown in FIG. 1. The clients 101 to 103 store application programs for implementing such a workflow, and documents that are passed among clients are processed by the application programs. Note that the communication that takes place among the apparatuses included in this document processing system may be carried out using a wired medium such as Ethernet® cables, or may be carried out using a radio wave- or optically-based wireless medium. In the embodiments, a document is generated by the client 101, and that document is then passed to the clients 102 and 103 via the network 104.

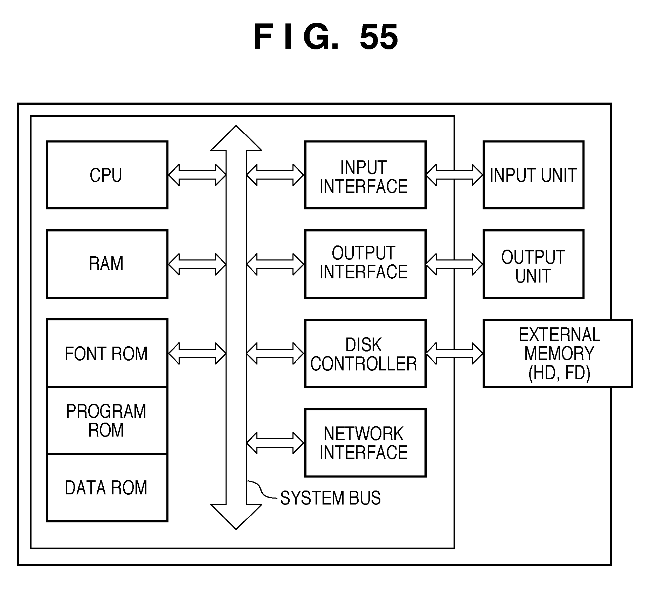

FIG. 55 is a diagram illustrating an example of the configuration of a host computer indicated in FIG. 1. The host computer in the embodiments is a general information processing apparatus, such as that shown in FIG. 55. As shown in FIG. 55, the host computer includes a CPU that executes processing for documents in which diagrams, images, text, and tables (including spreadsheets) are contained based on a document processing program or the like stored in a program ROM within a ROM or an external memory. The CPU performs overall control of the respective blocks connected to a system bus.

An operating system program (OS), which is a control program of the CPU, and the like are stored in the program ROM within the ROM or the external memory. Furthermore, font data and the like used when performing the stated document processing is stored in a font ROM within the ROM or the external memory. Finally, various types of data used when performing document processing and the like are stored in a data ROM within the ROM or the external memory.

A RAM functions as the main memory, working area, and the like for the CPU. An input interface controls key inputs from a keyboard, a pointing device, or the like. An output interface controls a display, such as a CRT display. A disk controller controls the access to the external memory in which a boot program, various applications, font data, user files, editing files, printer control command generation programs (printer drivers), and the like are stored. The external memory is a hard disk (HD), a flexible disk (FD), or the like. A network interface is connected to a network such as a LAN and enables communication with other devices.

FIG. 2 is a diagram illustrating the module configuration of an application 200 for generating a digital document having a structure in which documents to be passed among clients in the system indicated in FIG. 1 are packaged together. The application indicated in FIG. 2 is an application that manages a workflow for a series of operations, in which, for example, a document that is an invoice is raised, the invoice is authorized by adding an electronic signature, and the invoice is then printed. In FIG. 2, the portions that manage the various processes of the workflow have been omitted, and only the portions that generate the digital document are shown.

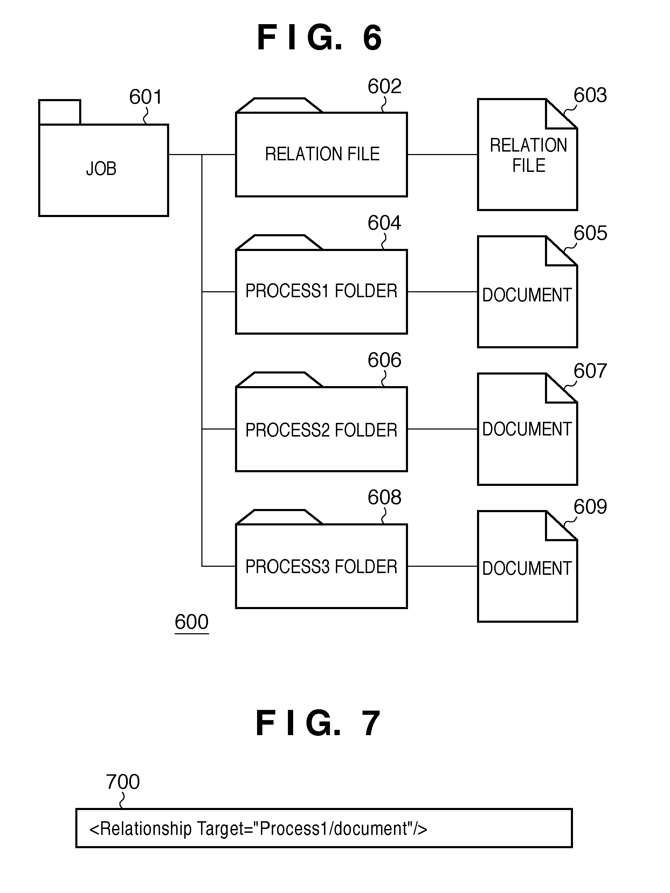

An access unit 201 indicated in FIG. 2 generates digital documents, accesses documents stored in a certain digital document hierarchy, and so on. A user interface control unit 202 controls user input/output by displaying a user interface window in a display of the client 101, performing audio input/output, and so on. A process control unit 203 defines the various processes of the workflow and controls the various other units in accordance with the defined process information. Note that the application 200 may be configured as a standalone application, or may be configured as a plug-in that adds a library to an existing application. In the embodiments, processes are defined in advance by the process control unit 203, and when a digital document is newly created, that digital document is created in a document format such as that described later with reference to FIG. 6.

### <Generation Procedure for Digital Document>

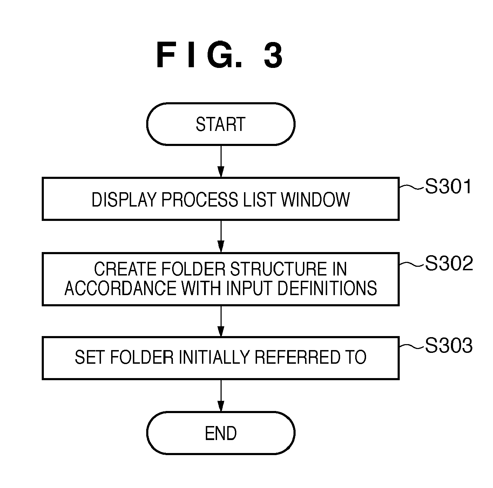

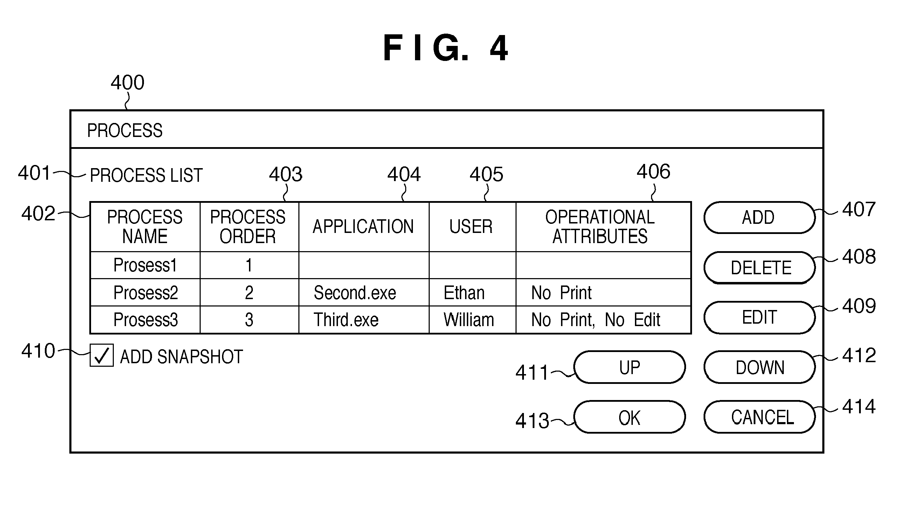

FIG. 3 is a flowchart illustrating an outline of a procedure by which the application 200 indicated in FIG. 2 generates a digital document. First, in step S301, the application 200 displays a process list window 400, shown in FIG. 4, in the display unit of a client, using the user interface control unit 202. Next, in step S302, a user defines the various processes of a workflow through the process list window 400, and confirms the definitions using an "OK" button or the like. The application 200 then configures a digital document in a document format according to the process definitions input by the user. Finally, in step S303, a folder for referring to the document first displayed to the user is created, and that reference destination is set.

The process list window 400 shall be described next. FIG. 4 is a diagram illustrating an example of the process list window. The defined processes are displayed as a list in a process list 401. Process name 402 indicates the process name defined for a process; process order 403 indicates the order of processing defined for a process; and application 404 indicates the application that is defined as processing each process. Note that the application 404 is, for example, an application for adding an a electronic signature and an application for raising an invoice, and is thus different from the application 200 shown in FIG. 2. Furthermore, user 405 indicates a username corresponding to a process, and operational attributes 406 indicates attributes that have been assigned to a process.

A user can display a process definition window 500, described later, using a button 407, and can create additional processes thereby. Furthermore, the user can delete a selected process from the process list 401 using a button 408, and can display the process definition window 500 for a process selected in the process list 401 and edit that process using a button 409. Finally, the user can add a snapshot of the document being processed by the current process by ticking a checkbox 410.

In addition, the user can switch the process order 403 of a process selected in the process list 401 to a previous process using a button 411. Likewise, the user can switch the process order 403 of a process selected in the process list 401 to a subsequent process using a button 412. The user can then confirm the process list and generate the digital document to be generated/edited, that includes the process information, using a button 413. Finally, the user can cancel the creation of the process list and close the dialog using a button 414.

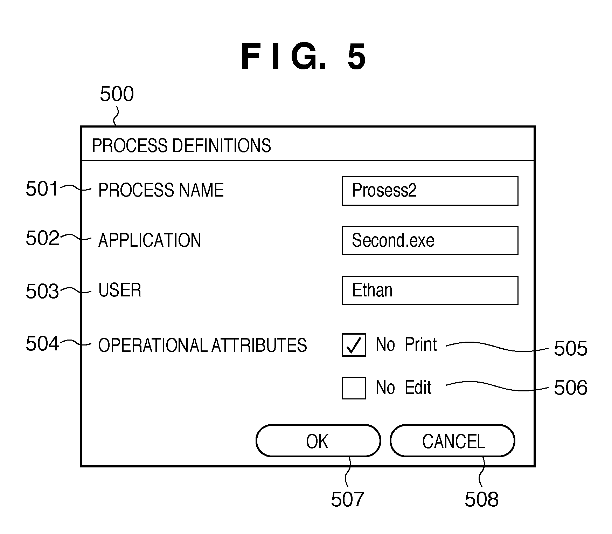

The process definition window 500 shall be described next. FIG. 5 is a diagram illustrating an example of the process definition window. Process name 501 indicates the name of the process being defined. Application 502 indicates the name of the application that processes that process. Note that the application 502 does not necessarily need to be input. In the case where the application 502 has been input, that process is edited by the application specified thereby when the document is opened. Username 503 indicates the name of the user who manages that process. Note that the username 503 does not necessarily need to be input. In the case where the username 503 has been input, that process can be edited by the user specified thereby when the document is opened. Furthermore, in the case where both the application 502 and the username 503 are specified, the process may be processed when the user specified by the username 503 uses the application 502 to open the document. Alternatively, the process may be processed in the case where the application 502 is used to open the document or the document is opened by the user specified by the username 503.

Operational attributes 504 can be used to set attributes for that process. By ticking a checkbox 505, the user can add an attribute prohibiting the printing of the document in that process. Meanwhile, by ticking a checkbox 506, the user can add an attribute prohibiting the editing of the document in that process. The user confirms the definitions of that process using a button 507. The user can also cancel the definitions of that process by using a button 508.

### <First Embodiment of Digital Document>

Next, a digital document generated as a result of defining a process using the application indicated in FIG. 2 shall be described. FIG. 6 is a diagram illustrating the structure of a digital document generated according to a first embodiment. The digital document generated in the embodiments is a structured document having a hierarchical structure, using, for example, XPS (XML Paper Specification).

As shown in FIG. 6, folders are configured for each instance of defined process information in a digital document 600. Here, as one example of the embodiments, the digital document 600 is a structured document that has structural elements 601, 602, 603, 604, 605, 606, 607, 608, and 609. Furthermore, as shown in FIG. 6, the digital document 600 has a hierarchical structure, with the structural element 601 at the top, the structural elements 602, 604, 606, and 608 therebelow, and structural elements 603, 605, 607, and 609 at the bottom.

With the digital document 600, first, the structural element 601 (a job folder), serving as the top folder, is created. As shown in FIG. 6, the job folder can also be viewed as the root folder of the digital document in the embodiments. The structural element 602 (a relation folder) and the structural elements 604 (a Process1 folder), 606 (a Process2 folder), and 608 (a Process3 folder) are then created, as subfolders, within the structural element 601 (the job folder). The structural element 602 (relation folder) stores the reference destination of the document processed by the current process of the digital document 600, or in other words, the structural element 603 (a relation file). The structural elements 604, 606, and 608 store the structural elements 605, 607, and 609, which are documents corresponding to the various processes defined in the process list window 400.

Here, the structural elements 605, 607, and 609 may be made to save already-specified or newly-specified documents when a process is defined using the process list window 400 in step S302 of FIG. 3. The structural elements 604, 606, and 608 may also be left empty, and the respective documents may be added by the applications corresponding to the various processes. Furthermore, the digital document 600 shown in FIG. 6 may be compressed and stored in a memory or the like of a client.

The digital document 600 created according to the procedure illustrated in FIG. 3 is then passed among the clients 101 to 103. In such a case, the digital document 600 may be passed around using, for example, email, HTTP communication, FTP communication, or the like, via the network 104. Alternatively, rather than using the network 104, the digital document 600 may also be passed around using a USB memory, an external HDD, or the like.

The content written in the stated structural element 603 (relation file) shall now be described.
FIG. 7 is a diagram illustrating an example of the content of this relation file. In the embodiments, the reference destination of the document processed by the current process is denoted in the relation file in the XML format. FIG. 7 illustrates a tag used when denoting this content in the XML format. As shown in FIG. 7, "Target="Process1/document" is specified in a tag 700. This specification indicates that the document currently being processed is the structural element 605 (document), based on the relative address (Process1/document) from the top folder, or the structural element 601 (job folder). In other words, this is information indicating the reference destinations of the structural elements in the structured document. Note that in the embodiments, the content shown in FIG. 7 may be denoted in a format other than the XML format.

### <Procedure by which the Application Advances Processes>

Next, a procedure performed by the application 200 for opening documents in each process using defined applications, editing the documents, and advancing the processes according to a workflow shall be described.

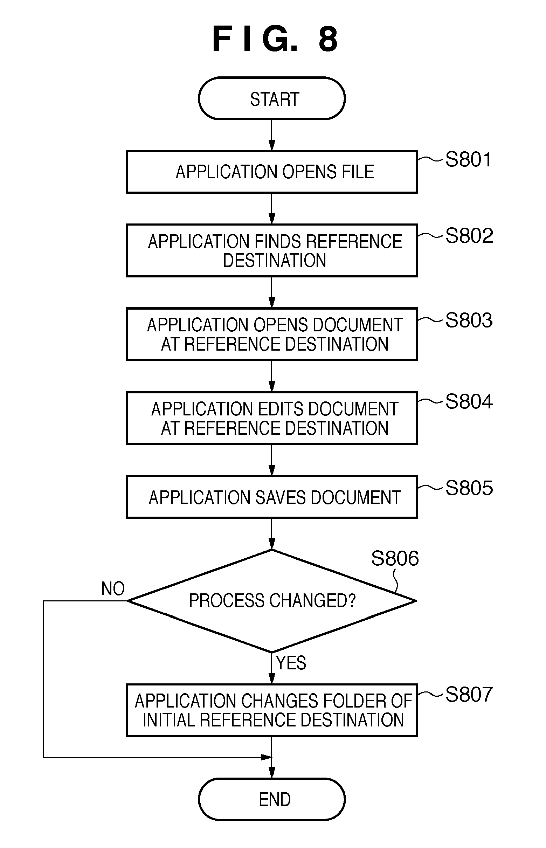

FIG. 8 is a flowchart illustrating a procedure for processing that advances processes in a workflow. Here, it is assumed that the processes have already been defined using the interface windows illustrated in FIGS. 4 and 5, and that a digital document has been generated in document format, as shown in FIG. 6, using the application 200. In the following processing, the users of the respective clients can advance the processes of the workflow using the digital document generated by the application 200.

First, in step S801, the application 200 opens the digital document using the access unit. Next, in step S802, the process control unit 203 of the application 200 refers to the tag 700 written in the structural element 603 (relation file) and obtains the process in the workflow that is currently underway. Here, it is assumed that "Process1/Document" is specified, as shown in FIG. 7. In step S803, the document specified by the tag 700 is opened by the access unit 201. Here, the "specified document" refers to the structural element 605 (document) in the structural element 604 (Process1 folder).

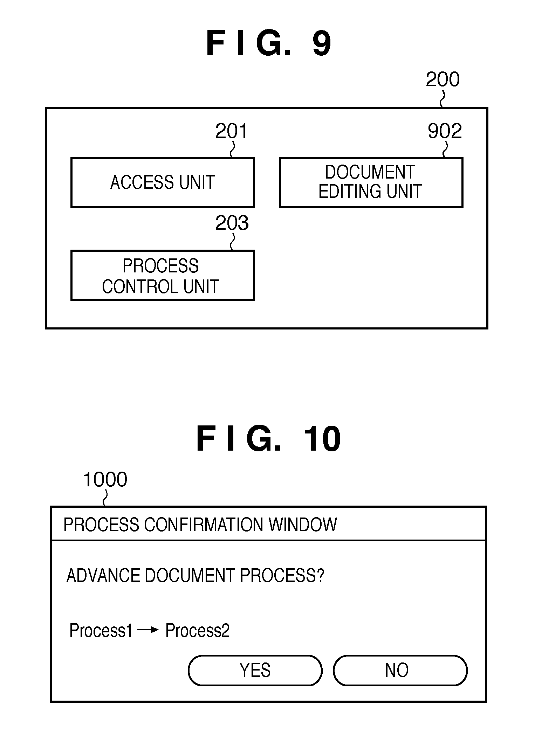

In step S804, a document editing unit 902 of the application 200 indicated in FIG. 9 edits the document. In the embodiments, the user may edit the document using, for example, document processing software, spreadsheet software, or the like. Furthermore, rather than the user editing the document, the application 200 may automatically process/edit the document instead.
In step S805, the document edited by the access unit 201 is saved.

Next, in step S806, the process control unit 203 of the application 200 determines whether or not to change the processes of the workflow. Here, when saving the document in step S805, the processes of the workflow may be advanced automatically, or a screen may be displayed for the user, enabling the user to make input regarding process changes. Note that when the workflow is automatically advanced, the process setting information shown in FIG. 4 is first saved in a memory by the process control unit 203 of the application 200. Then, when a document is passed among the clients 101 to 103, the processes may be advanced according to the process order 403 shown in FIG. 4 by also passing around the process setting information using inter-application communication.

In addition, the process setting information of the document may be set in the applications, through inter-application communication among the clients 101 to 103, at the time of setting processes using the screen indicated in FIG. 4. In addition, when a document is passed among the clients 101 to 103, files may be sent through inter-application communication, and the process control unit 203 of the application 200 may then refer thereto, at the time of setting processes using the screen indicated in FIG. 4.

Alternatively, the process control unit 203 of the application 200 may save the process setting information within that document. The applications 200 of the clients 101 to 103 may then refer to the process setting information file within the document. In addition, the process setting information shown in FIG. 4 may be saved in a database connected to the network 104 shown in FIG. 1, and the clients 101 to 103 may then refer to the process setting information.

In addition, the process setting information shown in FIG. 4 may be saved in a file on a server, such as a file server or an HTTP server, that is connected to the network 104 shown in FIG. 1, or in a memory. The process control units 203 of the applications 200 of the clients 101 to 103 may then communicate with the server and refer to the process setting information and automatically advance the processes thereby. Note that when the processes are automatically advanced, a process confirmation window may be displayed for the user.

FIG. 10 is a diagram illustrating an example of a process confirmation window displayed for the user.
The processes advance from process 1 to process 2 when the user presses a "yes" button in a process confirmation window 1000.

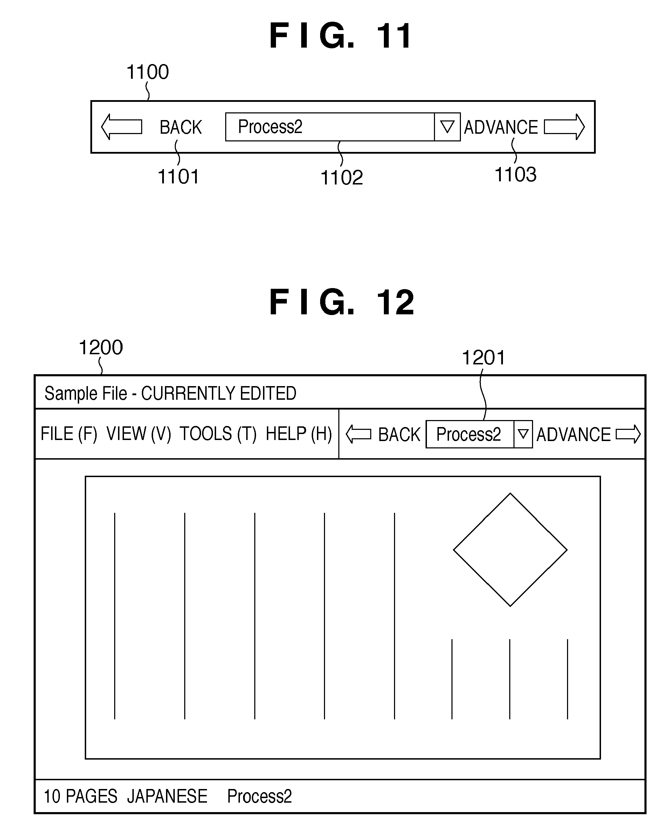

Next, a screen displayed for the user, used to make manual settings regarding process changes, shall be described with reference to FIG. 11. A toolbar 1100 such as that shown in FIG. 11 may be provided in the application 200, whereby an instruction to advance the process is made by the user pressing an "advance" button 1103. Note that at this time, the process setting information shown in FIG. 4 is saved in a memory by the process control unit 203 of the application 200 in order to determine the next process. Then, when a document is passed among the clients 101 to 103, the processes may be advanced according to the process order 403 shown in FIG. 4 by also passing around the process setting information using inter-application communication.

In addition, the process setting information shown in FIG. 4 may be saved in a memory by the process control unit 203 of the application 200. Then, the process setting information of the document may be set in the applications, through inter-application communication among the clients 101 to 103, at the time of setting processes using the screen indicated in FIG. 4. In addition, the process control unit 203 of the application 200 may save the process setting information in a file. Then, when a document is passed among the clients 101 to 103, files may be sent through inter-application communication, and the process control unit 203 of the application 200 may then refer thereto, at the time of setting processes using the screen indicated in FIG. 4.

Alternatively, the process control unit 203 of the application 200 may save the process setting information within the document, and the applications 200 of the clients 101 to 103 may then refer to the process setting information file within the document. In addition, the process setting information shown in FIG. 4 may be saved in a database connected to the network 104 shown in FIG. 1, and the clients 101 to 103 may then refer to the process setting information. In addition, the process setting information shown in FIG. 4 may be saved in a file on a server, such as a file server or an HTTP server, that is connected to the network 104 shown in FIG. 1, or in a memory. The process control units 203 of the applications 200 of the clients 101 to 103 may then communicate with the server and refer to the process setting information and automatically advance the processes thereby.

Note that in the case where the final process of the document is being processed, the "advance" button 1103 may be grayed out, or an error message may be displayed when the "advance" button 1103 is pressed. Alternatively, the document may be saved in a database connected to the network 104. Or, the document may be saved in a server, such as a file server or an HTTP server, that is connected to the network 104, or may be printed. Or, the document may be discarded when the "advance" button 1103 is pressed.

In addition, it is possible to return the document to the previous process by pressing a "back" button 1101 in the toolbar shown in FIG. 11. Note that in the case where the first process of the document is being processed, the "back" button 1101 may be grayed out, or an error message may be displayed when the "back" button 1101 is pressed.

It is also possible for an arbitrary process to be selected from a pull-down menu 1102. Note that in the embodiments, the determination made in step S806 is performed when the document is saved; however, this determination may be made when the application 200 is closed. In the case where it has been determined in step S806 that the workflow process is to be changed, the procedure advances to step S807. On the other hand, in the case where it has been determined that the workflow process is not to be changed, the processing of this flowchart ends.

In step S807, the denotation in the tag 700 is updated in accordance with the process setting information set using the window shown in FIG. 4 so that the next process in the workflow is specified. Here, when the denotation of the tag 700 is updated, the document that is currently open may be closed and the document of the next process opened, or the document that is currently open may be copied to the next process.

According to above descriptions, in the case where the toolbar 1100 as indicated in FIG. 11 is used, the user can, by pressing the "back" button 1101, update the tag 700 so that the document of the previous process is referred to, and reopen that document. It is also possible for the user to select an arbitrary process using the pull-down menu 1102. For example, when the user selects "Process2", the tag 700 can be updated so that the document of the selected process is referred to, and that document is reopened.

In the embodiments, the function for managing the workflow processes may be plugged in to another existing application, rather than the application 200. FIG. 12 is a diagram illustrating an example in which a function for managing processes is plugged in to, for example, existing document editing software. A toolbar 1201 for managing workflow processes is plugged in to existing document editing software 1200, as shown in FIG. 12. As a result, it is possible to manipulate processes using a user interface provided by the existing document editing software. In addition, such a preexisting application may also be configured to automatically advance a document process when an edited document is saved, when the application is closed, and so on. Alternatively, a window for confirming the advancement of processes, such as that shown in FIG. 10, may be displayed.

### <Second Embodiment of Digital Document>

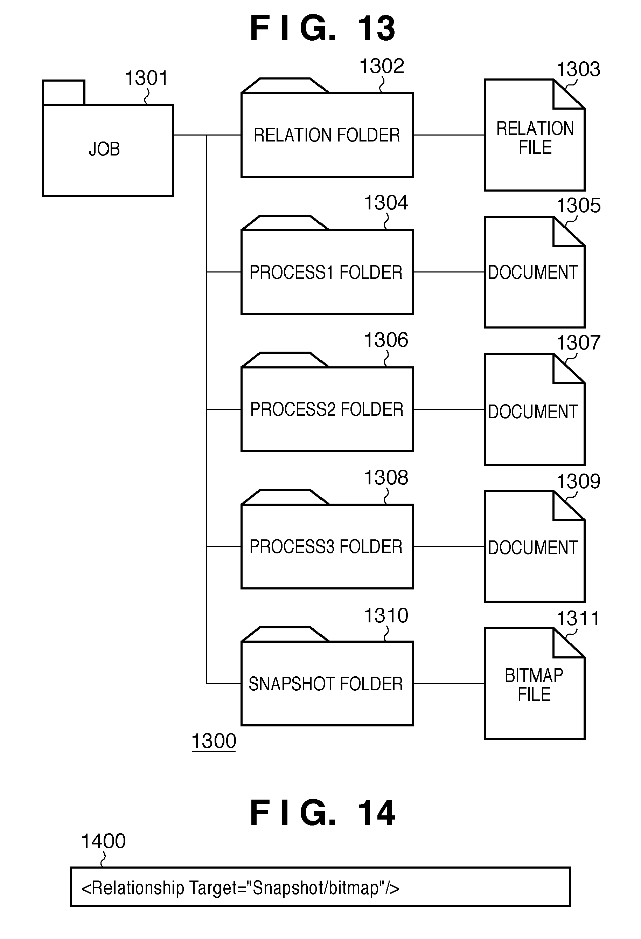

Next, descriptions shall be given regarding the case where the checkbox 410 in FIG. 4 is ticked and the addition of a snapshot is set to "on". FIG. 13 is a diagram illustrating the structure of a digital document in the case where the addition of a snapshot is set to "on", according to the second embodiment.
The structure of a digital document 1300 shown in FIG. 13 differs from that shown in FIG. 6 in that the digital document 1300 has a structural element 1310 (a snapshot folder) and a structural element 1311 (a bitmap folder). The structural elements 1301 to 1309 are the same as the structural elements 601 to 609 shown in FIG. 6.

As shown in FIG. 13, a snapshot of the document in its current state is stored in the snapshot folder. As an example of such a snapshot storage unit, FIG. 13 shows that the document has been converted into the bitmap format and is stored as a bitmap file in such a snapshot folder.

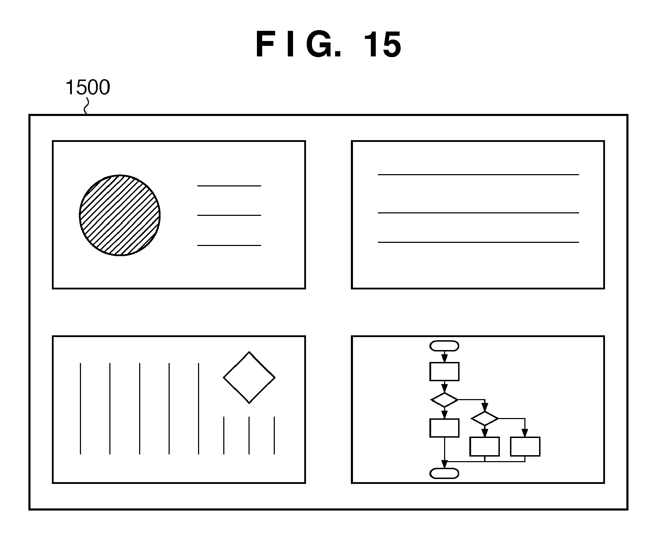

In addition, in the case where the digital document is configured as shown in FIG. 13, the structural element 1311 can be referred to by denoting the structural element 1303 (relation file) in a tag 1400, as shown in FIG. 14. As a result, a thumbnail 1500 of the document snapshot, such as that shown in FIG. 15, can be displayed, and the user can visually confirm the current editing details.

### <Third Embodiment of Digital Document>

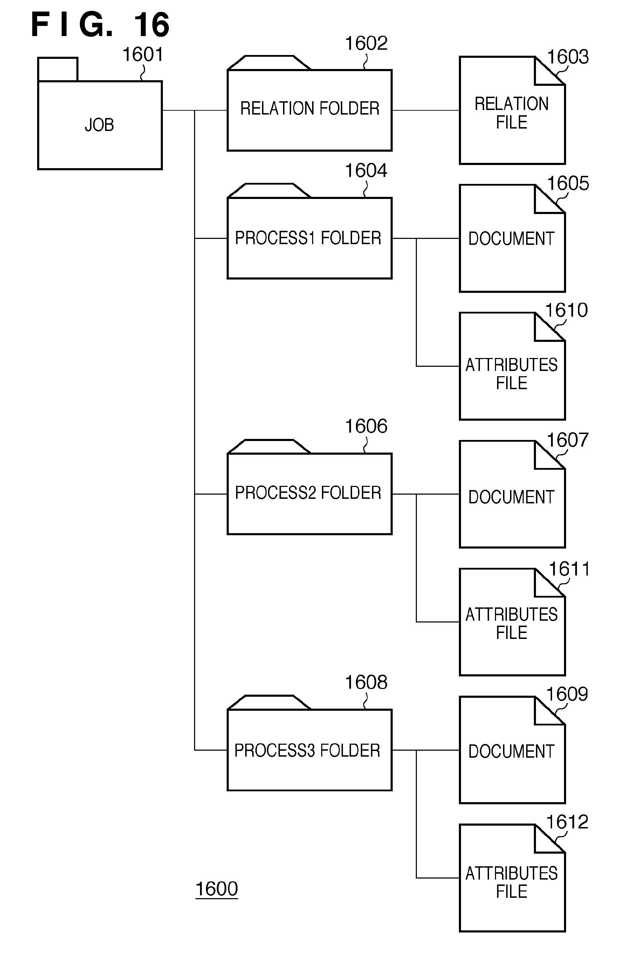

Next, descriptions shall be given regarding the case where items in the operational attributes 504, shown in FIG. 5, is ticked, and various attributes are set. FIG. 16 is a diagram illustrating the structure of a digital document in the case where items in the operational attributes 504 are ticked and attributes are set, according to the third embodiment. The structure of a digital document 1600 shown in FIG. 16 differs from that shown in FIG. 6 in that the digital document 1600 has structural elements 1610, 1611, and 1612, which are attribute files. The structural elements 1601 to 1609 are the same as the structural elements 601 to 609 shown in FIG. 6.

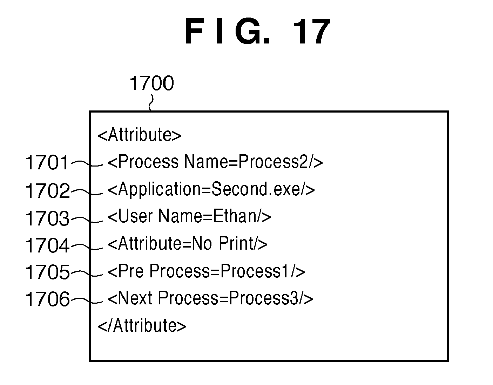

As shown in FIG. 16, an attribute file, which has attribute information of various processes, is stored in each process folder along with the documents. As an example of such an attribute storage unit, the present embodiment illustrates that an attribute file indicating written content such as that shown in FIG. 17 is stored in such a folder. In FIG. 17, a tag 1700 is denoted in the XML format, but another format may be used instead.

A tag 1701 indicates the name of the process defined by the process name 501. A tag 1702 indicates the application name defined by the application 502. A tag 1703 indicates the username defined by the username 503. A tag 1704 indicates the attribute information of the process defined by the operational attributes 504. A tag 1705 indicates the name of the previous process according to the process order 403 shown in FIG. 4. Finally, a tag 1706 indicates the name of the next process according to the process order 403.

According to the structure of the digital document shown in FIG. 16, an attribute file, in which default print settings for each process are denoted, may be generated and stored when the button 413 shown in FIG. 4 is pressed and the digital document is generated and saved.

### <Fourth Embodiment of Digital Document>

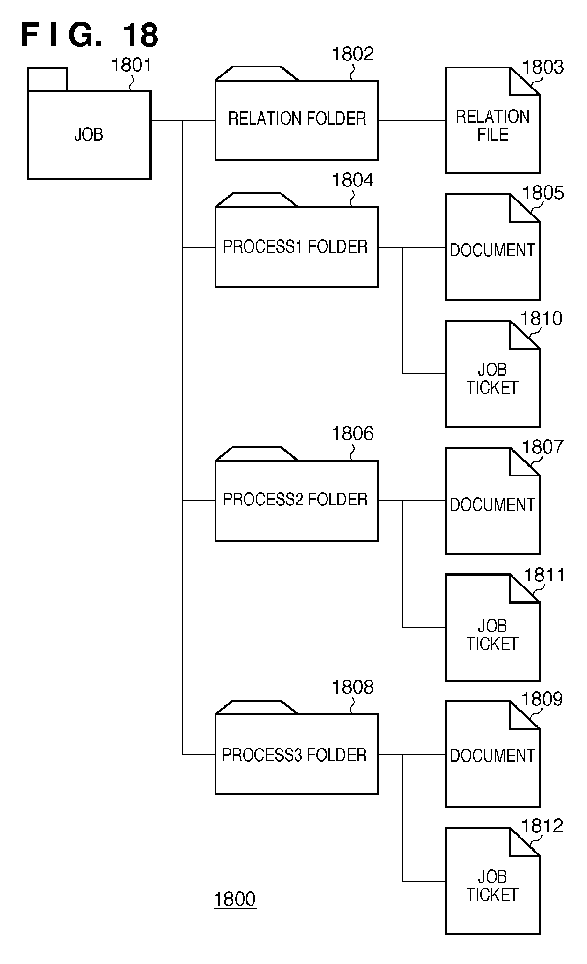

In addition to the print settings specified in the attribute file described with reference to FIG. 16, there are also cases where print settings are specified using a job ticket. Next, descriptions shall be given regarding a digital document structure in which a job ticket indicating print settings is added to each process folder. FIG. 18 is a diagram illustrating the structure of a digital document in the case where print settings have been made for each process in a workflow, according to the fourth embodiment. The structure of a digital document 1800 shown in FIG. 18 differs from that shown in FIG. 6 in that the digital document 1800 has structural elements 1810, 1811, and 1812, which are job tickets. Structural elements 1801 to 1809 are the same as the structural elements 601 to 609 shown in FIG. 6.

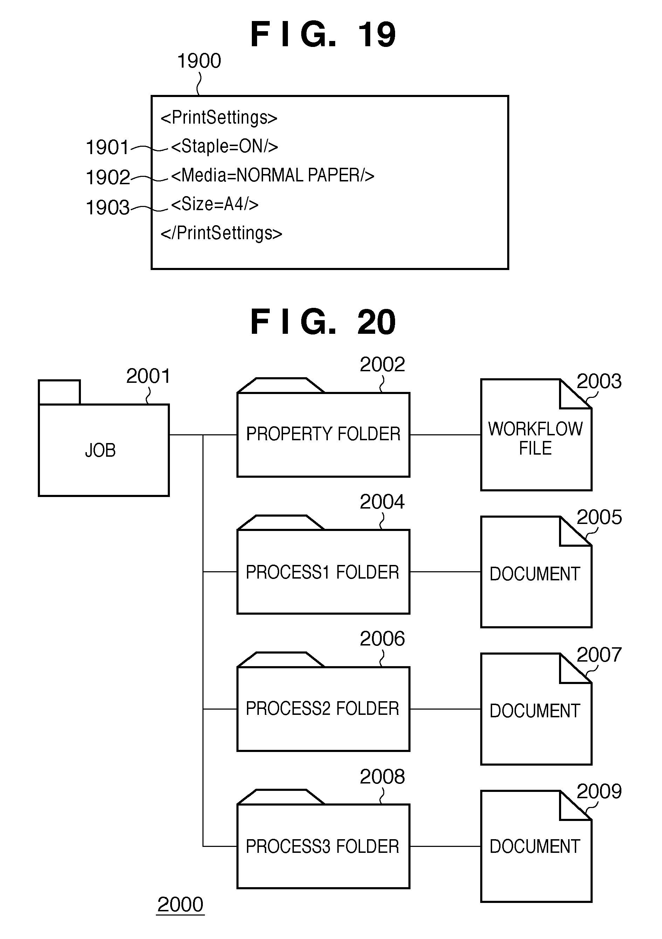

As shown in FIG. 18, job tickets indicating print settings specified for the respective processes are stored in the respective process folders along with the documents. In the present embodiment, such a folder is an example of a job ticket storage unit, in which a job ticket indicating written content such as that shown in FIG. 19 is stored. In FIG. 19, a tag 1900 is denoted in the XML format, but another format may be used instead.

A tag 1901 indicates a specification to staple a sheaf of printed sheets together. A tag 1902 indicates a specification regarding the type of paper to be used for printing. Finally, a tag 1903 indicates a specification regarding the size of paper to be used for printing.

### <Fifth Embodiment of Digital Document>

Next, descriptions shall be given regarding the case where a file corresponding to the process list defined in FIG. 4, described earlier, is included in the configuration of the digital document according to the present embodiment. FIG. 20 is a diagram illustrating the structure of a digital document that has a file corresponding to the process list indicated in FIG. 4, according to the fifth embodiment. The structure of a digital document 2000 shown in FIG. 20 differs from that shown in FIG. 6 in that the digital document 2000 has a structural element 2002 (a properties folder) and a structural element 2003 (a workflow file). Structural elements 2001 and 2004 to 2009 are the same as the structural elements 601 and 604 to 609 shown in FIG. 6.

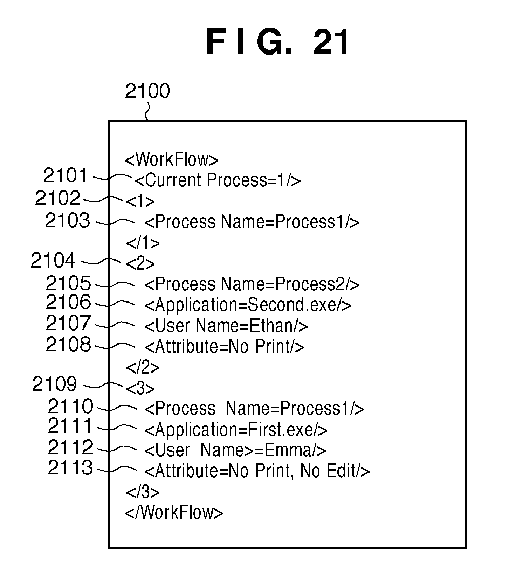

As shown in FIG. 20, the structural element 2001 (JOB) has the structural element 2002 (properties folder) as its subfolder. Furthermore, a workflow file that has information of the process list shown in FIG. 4 is stored in the structural element 2002 (properties folder). FIG. 21 is a diagram illustrating an example of content written in the workflow file. In FIG. 21, a tag 2100 is denoted in the XML format, but another format may be used instead.

A tag 2101 indicates a specification regarding the number of the current process. Tags 2102, 2104, and 2109 indicate the numbers of various processes according to the process order 403 shown in FIG. 4. Tags 2103, 2105, and 2110 indicate the process names of the various processes defined by the process name 501 shown in FIG. 5. Tags 2106 and 2111 indicate the names of the applications to be processed by the various processes defined by the application 502. Tags 2107 and 2112 indicate the username processed by the various processes defined by the username 503. Tags 2108 and 2113 indicate the attribute information set for the various processes defined by the operational attributes 504. Note that although in FIG. 20, the workflow file in which the information of the process list is saved is held within the digital document, that file may also be held outside of the digital document, in which case the digital document refers to the workflow file held outside.

### <Sixth Embodiment of Digital Document>

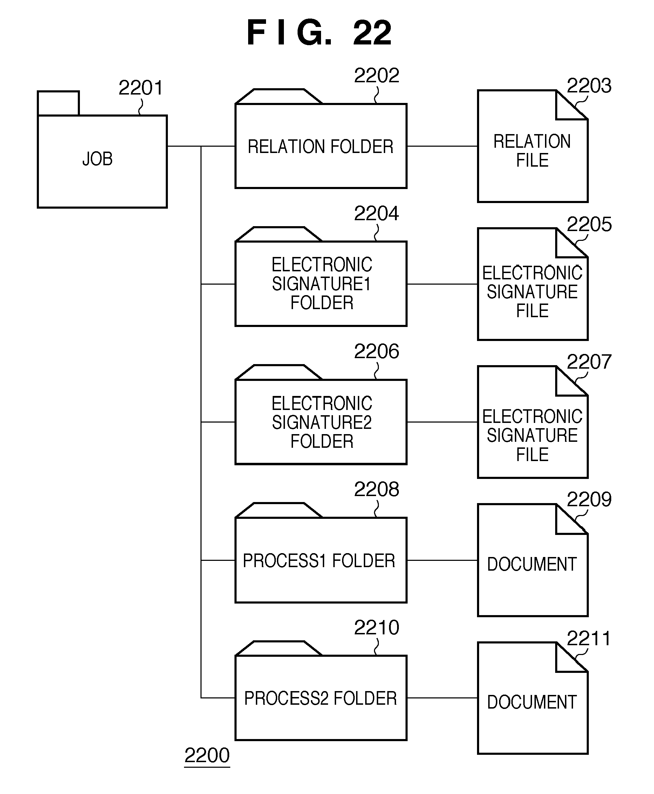

Next, descriptions shall be given regarding the structure of the digital document in the case where an electronic signature has been given to a document in each process of the workflow. FIG. 22 is a diagram illustrating the structure of a digital document in the case where an electronic signature has been given to a document in each process, according to the sixth embodiment. The structure of a digital document 2200 shown in FIG. 22 differs from that shown in FIG. 6 in that the digital document 2200 has a structural element 2204 (an electronic signature1 folder), a structural element 2206 (an electronic signature2 folder), and structural elements 2205 and 2207, which are electronic signature files. Structural elements 2201 to 2203 and 2208 to 2211 are the same as the structural elements 601 to 603 and 604 to 607 shown in FIG. 6.

As shown in FIG. 22, the structural element 2201 (JOB) has the structural elements 2204 (electronic signature1 folder) and 2206 (electronic signature2 folder) as its subfolders. Furthermore, the electronic signatures given in each process are stored in the structural elements 2204 and 2206.

FIG. 23 is a diagram illustrating an example of the content of a relation file in the structure indicated in FIG. 22. As shown in FIG. 23, the structural element 2207, which is an electronic signature, can be referred to using a tag 2300. In the present embodiment, such a structural element is an example of an electronic signature storage unit in which an electronic signature file indicating written content such as that shown in FIG. 24 is stored.

A tag 2401 indicates information of the reference destination of the document to which the electronic signature corresponds. A tag 2402 indicates data in which the hash value of the target document is encrypted with a secret key. The user decodes the encrypted hash value using a public key, and compares the result with the hash value calculated from the document specified in the tag 2401. In the case where the comparison results in a match, it can be confirmed that the document has not been tampered with. Note that this electronic signature system is a system that is commonly used.

While the structure of the digital document has been described thus far in the first through sixth embodiments, it should be noted that the structures in those embodiments may be combined. For example, the first embodiment may include the properties folder and workflow file described in the fifth embodiment.

### <First Example>

Examples in which the digital document structured as described thus far are applied shall be described hereinafter.

FIG. 25 is an example that applies the digital document according to the first embodiment. In the workflow shown in FIG. 25, a worker 2501 first raises an invoice in order to apply for payment (an invoicing process). Next, a manager 2502 electronically approves the document with which the invoice was raised (a payment process), after which an accounting manager 2503 carries out accounting processing (an accounting process).

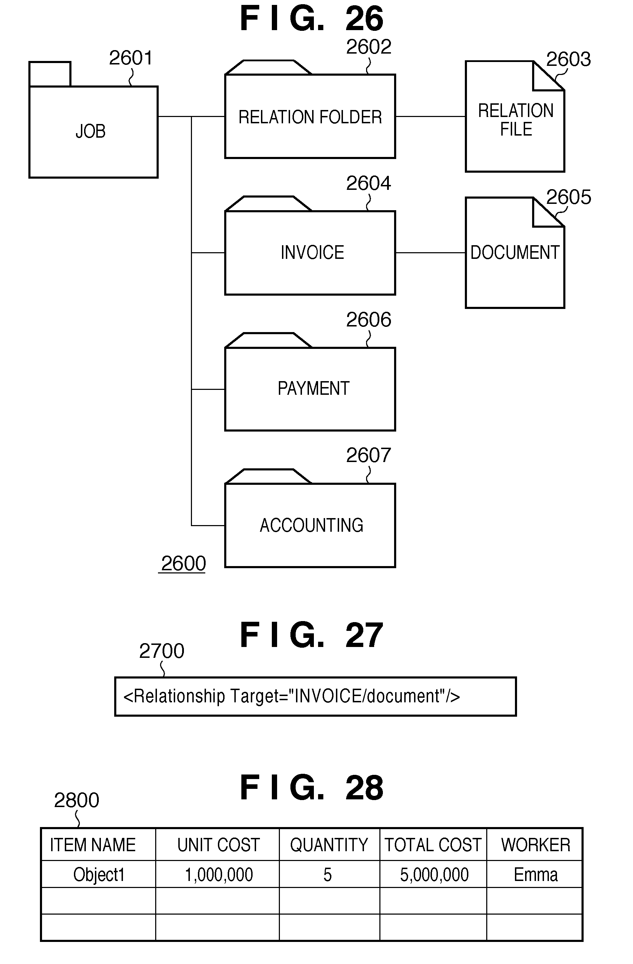

The definitions for the various processes of the workflow are made in advance in the application used when the worker 2501 raises the invoice, and as a result, a digital document having the structure shown in FIG. 26 is created. Structural elements 2601 to 2603 shown in FIG. 26 are the same as the structural elements 601 to 603 shown in FIG. 6. The structural elements 2604, 2606, and 2607 correspond to the structural elements 604, 606, and 608. In addition, the structural element 2605 corresponds to the structural element 605.

First, an invoicing process document, or in other words, the structural element 2605, as indicated by a tag 2700 shown in FIG. 27, is denoted in the structural element 2603 (relation file) as reference information. FIG. 28 is a diagram illustrating an example of a document when the worker 2501 raises an invoice.

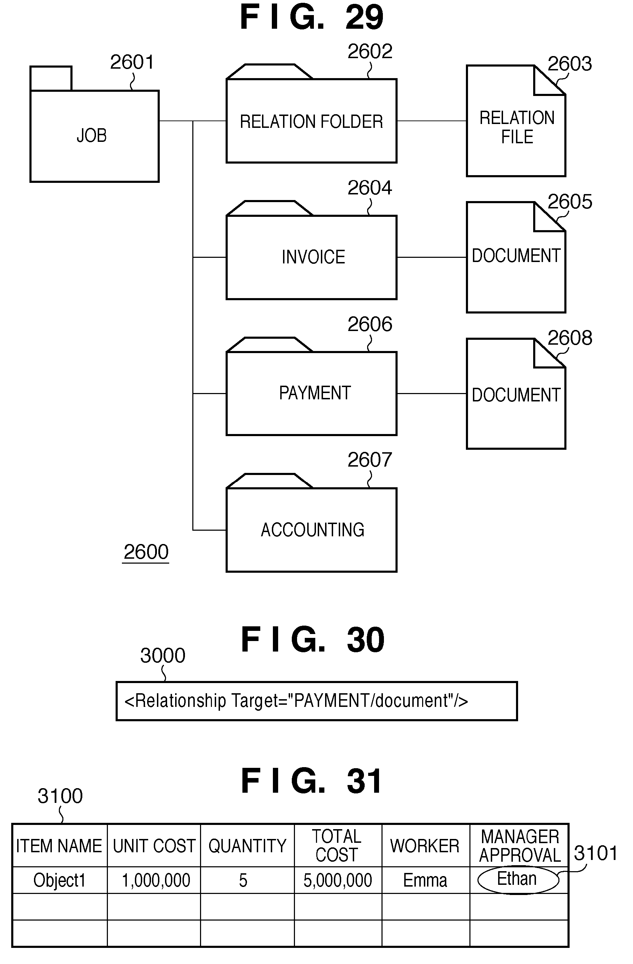

FIG. 29 is a diagram illustrating the structure of a digital document 2600 when the process has been advanced to the storage of that digital document in order to submit a payment application form to a manager. The document created by the worker 2501 (the structural element 2605) is copied to the next process, or the payment process. As a result of the copying, the structural element 2608 (a document) is generated.

In this case, the content denoted in the relation file (the structural element 2603) is updated so as to refer to the document of the payment process, or in other words, the structural element 2608, as indicated by a tag 3000 shown in FIG. 30. As a result, the manager 2502 can edit the structural element 2608 (document).

Here, the manager 2502 furthermore applies an electronic stamp to the document, certifying the manager's approval, and updates the document. FIG. 31 is a diagram illustrating an example of an updated document. A document 3100 shown in FIG. 31 is a document to which an electronic stamp 3101 has been applied to the document 2800 shown in FIG. 28. Here, the access privileges for the document may be changed or an electronic signature may be added to the document 3100, or in the case where the document 3100 is graphical data, the document may be taken as a bitmap file so that it cannot be changed easily, to prevent the document from being tampered with.

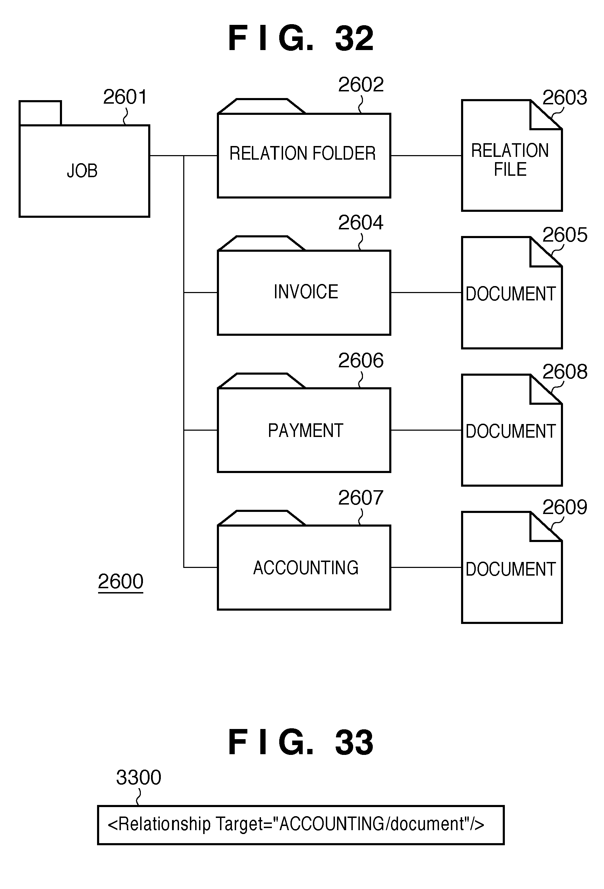

Next, the manager 2502 advances the process of the document, passing the document to accounting. FIG. 32 is a diagram illustrating the structure of a digital document when the process has been advanced to an accounting process. The document to which the manager 2502 applied the electronic stamp (the structural element 2608) is copied to the accounting process (the structural element 2607). As a result of the copying, a structural element 2609 (a document) is generated. Furthermore, the content denoted in the relation file (the structural element 2603) is updated so as to refer to the document of the accounting process, or in other words, the structural element 2609, as shown in FIG. 33.

In the workflow shown in FIG. 25, the accounting manager 2503 confirms the document, and in the case where a flaw, such as sales tax not being added to price, is discovered in the written content thereof, the document is returned to the worker 2501 in charge of the document, who is requested to make corrections. In such a case, the accounting manager 2503 updates the relation file (structural element 2603) of the document being passed around to the content denoted in FIG. 27, using, for example, the toolbar of the application shown in FIG. 11. Doing so makes it possible for the worker 2501 to easily correct the document. Similarly, the manager 2502 can easily correct the document by the accounting manager 2503 using the toolbar to update the relation file (structural element 2603) of the document being passed around to the content denoted in FIG. 30. Therefore, in a workflow in which a document is passed around, it is not necessary to redo the workflow from the first process every time, and because a process midway through the workflow can be re-executed, it is possible to increase the usability.

### <Second Example>

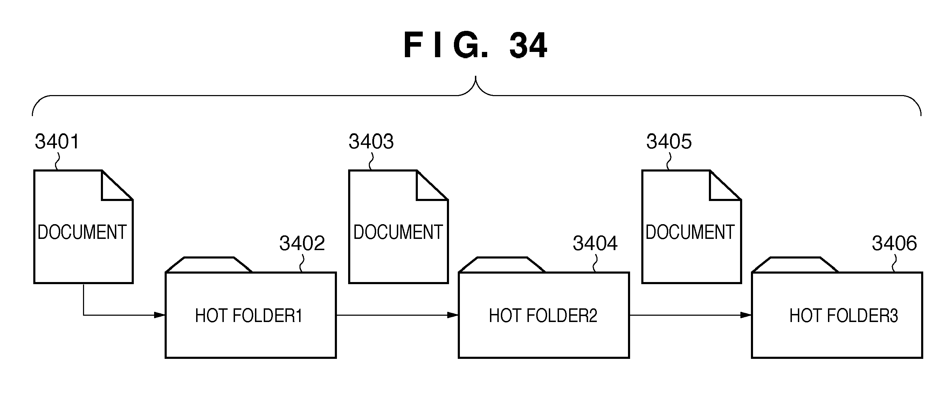

Next, an example in which documents are sequentially processed using multiple hot folders shall be described. FIG. 34 is a diagram illustrating an example that applies the digital document according to the first through sixth embodiments. As shown in FIG. 34, a document 3401 is placed in a hot folder 1, and the process defined for the hot folder 1 is carried out thereupon, thereby generating a document 3403. Furthermore, the document 3403 is placed in a hot folder 2, and the process defined for the hot folder 2 is carried out thereupon, thereby generating a document 3405. Finally, the document 3405 is placed in a hot folder 3, and the process defined for the hot folder 3 is carried out thereupon.

Any of the structures illustrated in FIGS. 6, 13, 16, 18, 20, and 22 may be used as the structure of the digital document that includes the document placed in the hot folders. In addition, the hot folders shown in FIG. 34 are managed by, for example, hot folder management software (not shown).

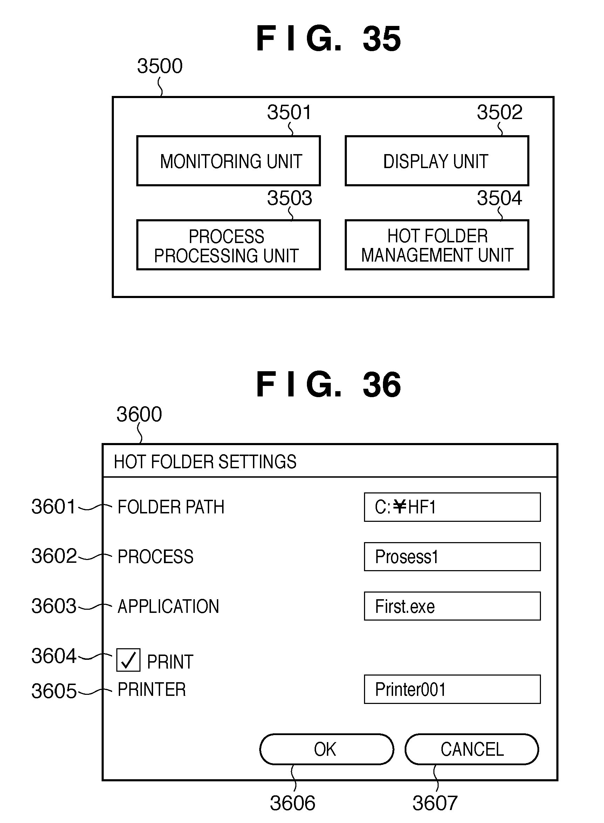

FIG. 35 is a diagram illustrating the module configuration of hot folder management software 3500 used in FIG. 34. Note that FIG. 35 shows only the module configuration regarding operations for passing documents among hot folders. A hot folder management unit shown in FIG. 35 performs settings for the various hot folders. When settings are made for a hot folder, the hot folder management unit 3504 displays, for example, a user interface window such as that shown in FIG. 36, in a display using a display unit 3502.

FIG. 36 is a diagram illustrating an example of a user interface window used for making hot folder settings. Folder path 3601 shown in a setting window 3600 specifies the location of the folder to be used as that hot folder. Process 3602 specifies which process in the workflow is to be executed for the document that has been placed in that hot folder. Application 3603 specifies the application software that is to process the document that has been placed in that hot folder.
A checkbox 3604 is used to specify whether or not the document that has been placed in that hot folder is to be printed. Here, the time at which to print the document can be set, for example, to occur before or after the processing performed by the specified application, or both before and after. Printer 3605 specifies the printer that is to print the document. Pressing a button 3606 finalizes the settings of that hot folder. The finalized hot folder is then a target to be monitored by a monitoring unit 3501. Meanwhile, pressing a button 3607 cancels the current settings.

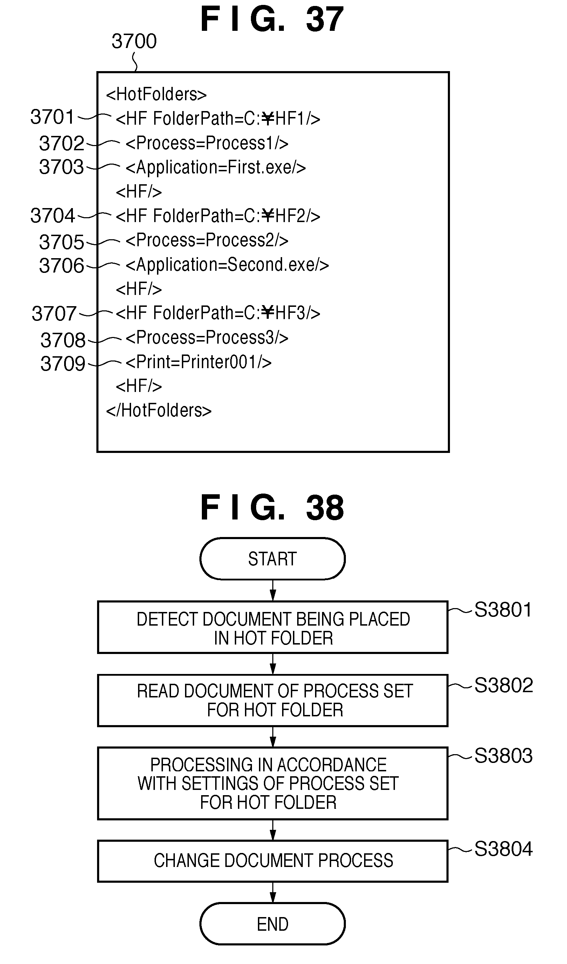

FIG. 37 is a diagram illustrating setting information for a hot folder held by hot folder management software. As shown in FIG. 37, the setting information of the hot folder is indicated by a tag 3700. Tags 3701, 3704, and 3707 indicate folder paths for each hot folder. Tags 3702, 3705, and 3708 indicate process information of the documents to be processed by each hot folder. Tags 3703 and 3706 indicate information regarding the application that is to process the document that has been placed in the hot folder. Tag 3709 indicates information of the printer that is to print the document that has been placed in the hot folder.

FIG. 38 is a flowchart illustrating a procedure performed when a document is placed in a hot folder.
It is assumed that the various processes are defined and a digital document has been created by the hot folder management software prior to this processing. First, in step S3801, the monitoring unit 3501 of the hot folder management software detects that a document has been placed in the hot folder. Next, in step S3802, a process processing unit 3503 of the hot folder management software loads the document stored in the process specified for the hot folder. Then, in step S3803, the process processing unit 3503 of the hot folder management software performs the process set in the hot folder on the document. In the present example, the document is either processed by the application, as indicated by the tags 3703 and 3706, or the document is printed, as indicated by the tag 3709. When the processing on the document in step S3803 ends, the procedure advances to step S3804, where the document process is advanced by the process processing unit 3503 of the hot folder management software. Here, the document of the current process may be copied to the next process when advancing the process of the document.

Like the first example, with the present example, in a workflow in which multiple processes in the document are processed using multiple hot folders, it is not necessary to redo the workflow from the first process every time, and because a process midway through the workflow can be re-executed, it is possible to increase the usability.

### <Third Example>

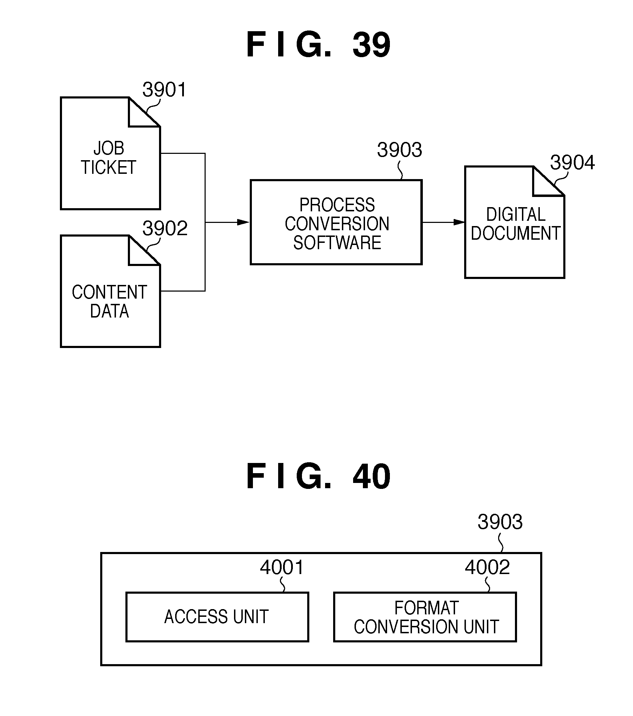

Next, an example shall be described in which data stored in hot folders is sequentially processed in accordance with a job ticket in which multiple processes are denoted. FIG. 39 is an example that applies the digital document according to the fourth embodiment. As shown in FIG. 39, content data is stored along with the job ticket within a hot folder (not shown), and the digital document according to the embodiments is generated using process conversion software. Here, print instructions are denoted in the job ticket for each process in the workflow. Furthermore, the content data is, for example, a PDF file, and is used in printing.

FIG. 40 is a diagram illustrating the module configuration of the process conversion software indicated in FIG. 39. Note that FIG. 40 shows only the module configuration regarding portions that generate a digital document from a job ticket and content data placed in a hot folder. An access unit 4001 shown in FIG. 40 reads a job ticket 3901 and content data 3902. A format conversion unit 4002 converts the read job ticket 3901 and content data 3902 into a digital document 3904.

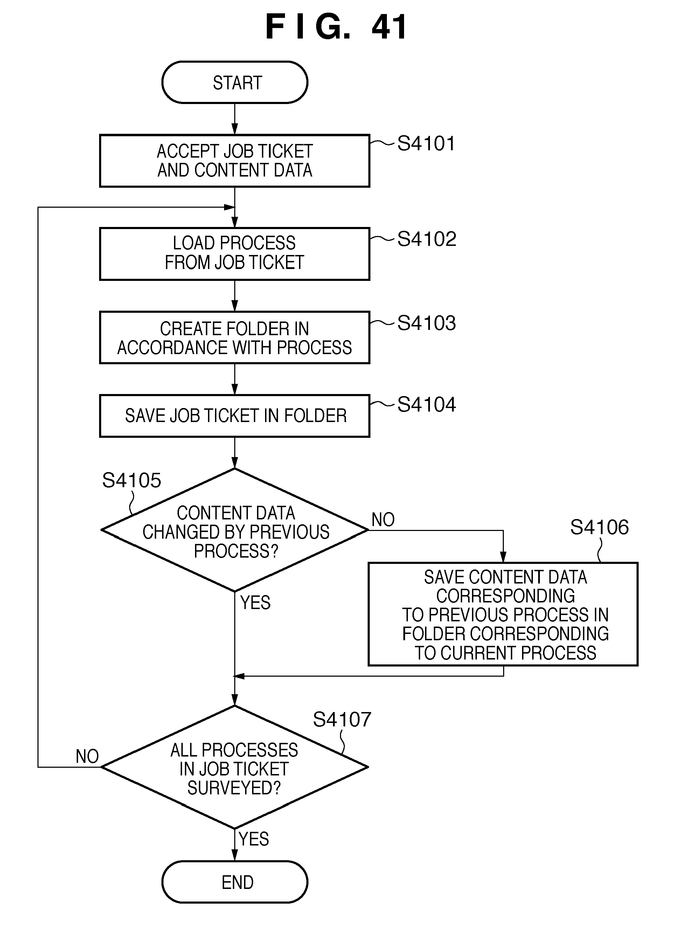

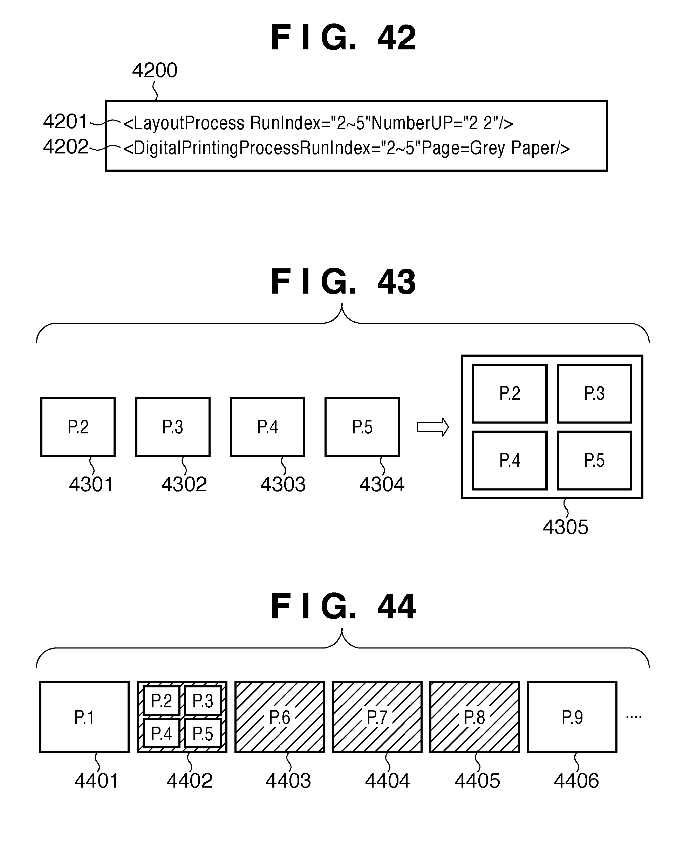

FIG. 41 is a flowchart illustrating a procedure for processing by which the process conversion software generates a digital document. First, in step S4101, the content data 3902 and job ticket 3901 are placed in the hot folder. After this, the process conversion software detects that the content data and job ticket have been placed in the hot folder, and reads the job ticket 3901 and content data 3902. FIG. 42 is a diagram illustrating an example of content written in a job ticket that has been placed in a hot folder. As shown in FIG. 42, a process for performing multiple prints is specified by a tag 4200. A tag 4201 indicates an instruction regarding a layout process for the content data; in FIG. 42, this indicates an instruction to arrange the content data from pages 2 through 5 in a 2x2 layout. FIG. 43 is a diagram illustrating the content of instructions for a layout process indicated by the tag 4201. Data 4301, 4302, 4303, and 4304 indicate the data of pages 2 through 5 of the content data 3902. In addition, data 4305 indicates the state in which those pieces of data are arranged in four panes, as a 2x2 layout, upon a print sheet.

Meanwhile, a tag 4202 indicates an instruction regarding the type of printing paper; in FIG. 42, this indicates an instruction to change the type of paper for pages 2 through 5 to gray paper. FIG. 44 is a diagram illustrating the content of instructions for a process indicated by the tag 4202. Page 4401 indicates the first sheet, which is printed using the default paper. However, pages 4402, 4403, 4404, and 4405 are printed using gray paper. Here, the page 4402 is arranged with a 2x2 layout as a result of the instructions of the layout process indicated by the tag 4201, as described earlier. Pages 4406 and on are printed using the default paper.

FIG. 41 shall now be discussed again. In step S4102, the format conversion unit 4002 of the process conversion software 3903 selects a single process from the job ticket 3901, and reads print instruction information therefrom. Here, when a process is selected, and a processing order is set, processes are then loaded in sequence in accordance with that order. Next, in step S4103, the format conversion unit 4002 creates a subfolder corresponding to the process, so that the digital document structure is used. In this case, the subfolder is created corresponding to, for example, the layout process. Next, in step S4104, the format conversion unit 4002 saves a job ticket, corresponding to the print instructions of the process, in the subfolder. In this case, a job ticket of, for example, the layout process is saved in the subfolder corresponding to the layout process.

In step S4105, the format conversion unit 4002 determines whether or not the content data has been changed by a previous process. In the case where it has been determined that the content data has not been changed, content data corresponding to the previous process is saved in the subfolder corresponding to the current process in step S4106, after which the procedure advances to step S4107. Here, the save may be carried out by copying the content data corresponding to the previous process into the subfolder corresponding to the current process. Meanwhile, in the case where it has been determined that the content data has been changed, the procedure advances to step S4107.

Then, in Step S4107, it is determined whether or not all the processes denoted in the job ticket have been surveyed. The procedure returns to step S4102 in the case where it has been determined that not all of the processes have been surveyed. However, the procedure ends in the case where it has been determined that not all of the processes have been surveyed.

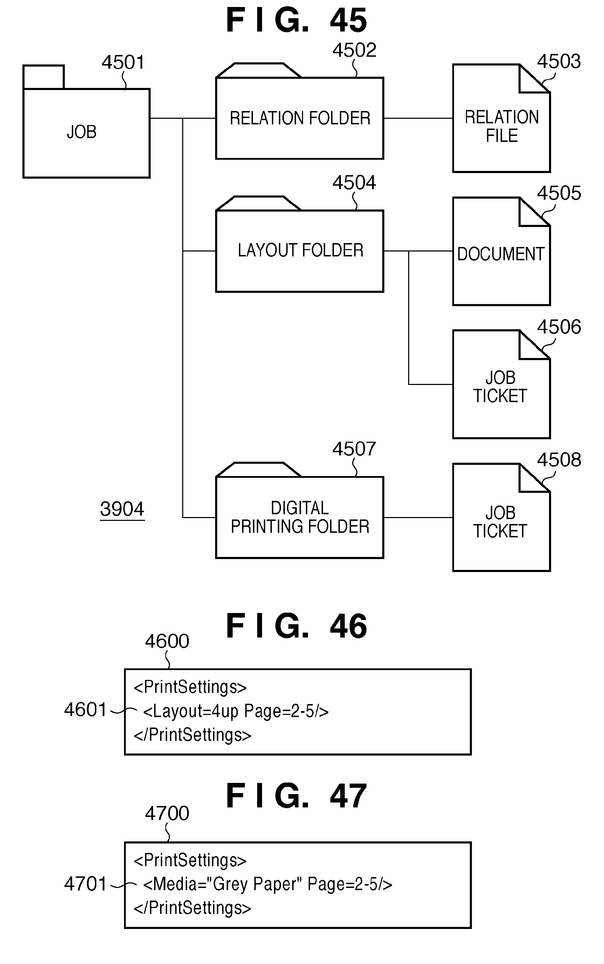

FIG. 45 is a diagram illustrating the structure of the digital document 3904 generated by the process conversion software 3903. As shown in FIG. 45, the digital document 3904 has a structural element 4501 (job folder) as its top folder. The structural element 4501 includes, as subfolders, a structural element 4502 that holds information of the current process, and structural elements 4504 and 4507, which correspond to the processes written in the job ticket shown in FIG. 42. In FIG. 45, the structural element 4501 is displayed as a job folder, whereas the structural element 4502 is displayed as a relation folder. Furthermore, the structural element 4504 is displayed as a layout folder, whereas the structural element 4507 is displayed as a digital printing folder. The structural element 4502 (relation folder) stores the structural element 4503 (relation file) specifying the information of the current process. In addition, structural element 4505 (content data) is stored in the structural element 4504 (layout folder). As described thus far, in the present example, processing is performed through a layout process that arranges content data in panes. Accordingly, in step S4105 of FIG. 41, it is determined whether or not the content data has been changed, and thus the content data is not saved in the structural element 4507 (the digital printing folder). Furthermore, job tickets (structural elements 4506 and 4508), in which print instructions for the processes are denoted, are stored in the structural element 4504 (layout folder) and the structural element 4507 (digital printing folder).

FIG. 46 is a diagram illustrating an example of content written in the structural element 4508 (a job ticket). As shown in FIG. 46, a tag 4600 indicates only the print instructions for the layout process. Pages 2 through 5 of the content data are set so as to be printed in a four-pane layout by a tag 4601. FIG. 47 is a diagram illustrating an example of content written in the structural element 4506 (a job ticket). As shown in FIG. 47, a tag 4700 indicates only instructions for the type of paper to be used for printing. Pages 2 through 5 of the content data are set so as to be printed on gray paper by a tag 4701.

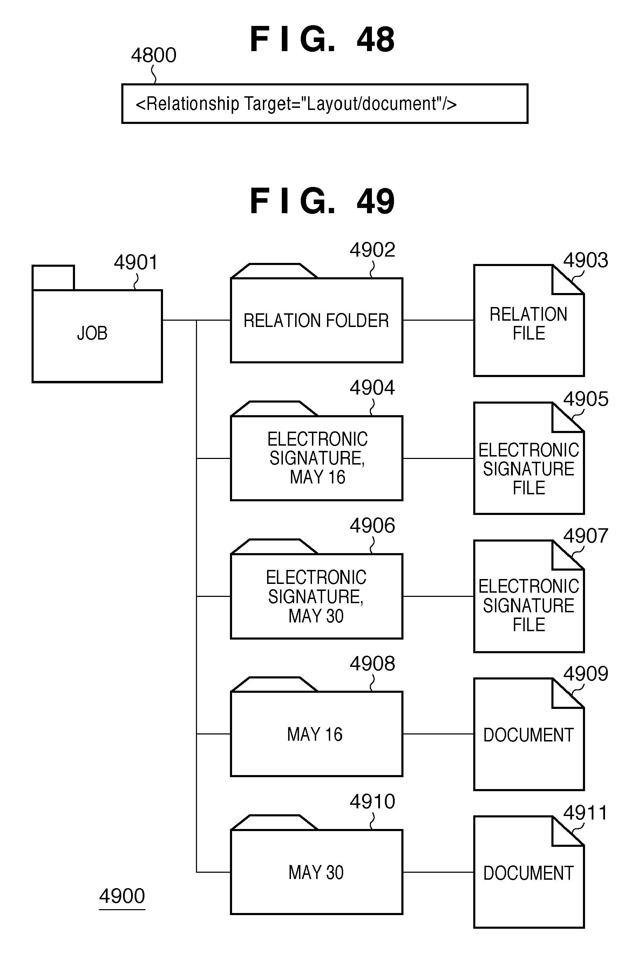

FIG. 48 is a diagram illustrating an example of the content written in a relation file. As shown in FIG. 48, "Target="Layout/Document" is specified in a tag 4800. Therefore, in the present example, the document can be specified by indicating that the document currently being processed is the reference destination, based on the relative address from the top folder, or the structural element 4501 (job folder).

In the descriptions provided thus far, FIGS. 46, 47, and 48 are denoted in the XML format, but another format may be used instead. In addition, the structural element 4502 (relation folder) and the structural element 4503 (relation file) may be configured outside of the digital document 3904 and referred to at that location. The content of the relation file may be overwritten based on the time at which the process processing advances. Furthermore, the digital document 3904 indicated in FIG. 45 may be compressed by a file compression function.

Thus far, descriptions have been given regarding a workflow in which multiple processes are processed by placing a job ticket specifying multiple processes into a hot folder along with a document. Therefore, according to the present example as well, in such a workflow, it is not necessary to redo the workflow from the first process every time, and because a process midway through the workflow can be re-executed, it is possible to increase the usability.

### <Fourth Example>

Next, an example shall be described in which a digital document stores documents on a process-by-process basis using an application that handles the major activities of a patient in a medical institution, such as examinations, reexaminations, and the like, as processes in an operational workflow. Furthermore, in the present example, charts and the like of the medical institution are given electronic signatures each time a document is issued in the workflow. For example, when a chart is issued on May 16, an electronic signature is added to that chart, and when the chart is then updated on May 30, n electronic signature is again given to that chart. Like the first example, in such a workflow, the definitions for the various processes of the workflow are made in advance in the application, and as a result, a digital document 4900 having the structure shown in FIG. 49 is created.

FIG. 49 is an example that applies the digital document according to the sixth embodiment. Structural elements 4901 to 4911 shown in FIG. 49 are the same as the structural elements 2201 to 2211 shown in FIG. 22. In other words, the digital document 4900 has a structural element 4901 as its top folder. Meanwhile, the job folder has a structural element 4902 serving as a subfolder that stores information referring to the latest document, and structural elements 4908 and 4910 that store documents for each date on which the chart was updated (structural elements 4909 and 4911). In FIG. 49, the structural element 4901 is displayed as a job folder, whereas the structural element 4902 is displayed as a relation folder. Meanwhile, the job folder has structural elements 4904 and 4906 that store the electronic signatures and timestamps given to each of the documents.

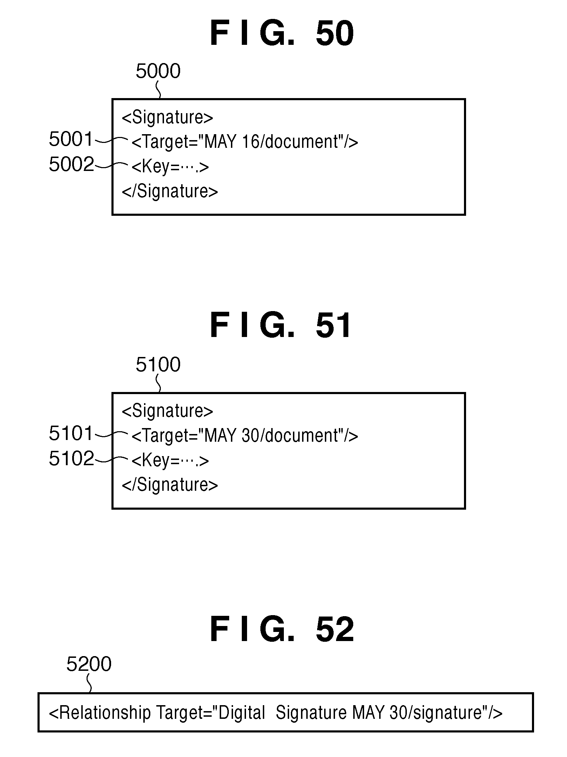

FIG. 50 is a diagram illustrating an example of content written in the structural element 4905 (an electronic signature file). As shown in FIG. 50, the document to which the electronic signature is to be applied is specified in a tag 5000. A tag 5001 indicates a specification regarding the document to which the electronic signature is to be applied. Furthermore, a tag 5002 indicates an electronic signature key for the specified document. FIG. 51 is a diagram illustrating an example of content written in a structural element 4907 (an electronic signature file). As shown in FIG. 51, the document to which the electronic signature is to be applied is specified in a tag 5100. A tag 5101 indicates a specification regarding the document to which the electronic signature is to be applied. Furthermore, a tag 5102 indicates an electronic signature key for the specified document.

FIG. 52 is a diagram illustrating an example of the content written in a relation file according to the present example. As shown in FIG. 52, the document with the latest date is written in a tag 5200 as reference information. For example, it is assumed that an electronic signature, a timestamp, or the like is added to the document when the document is updated. In such a case, the application creates a subfolder that has the new date (the update date) within the digital document 4900, and stores the updated document in that subfolder. In addition, a new subfolder for storing the added electronic signature, timestamp, and so on is created, and the electronic signature, timestamp, and so on is stored therein. It is also possible for the user to refer to the document with the latest date by the application overwriting the content denoted in the relation file.

The present invention also includes a case where the functionality of the aforementioned embodiments is implemented by an operating system (OS) or the like running on a computer executing part or all of the processing based on instructions in the code of a program (an information processing program). Furthermore, the present invention can also be applied in the case where the program code read out from the storage medium is written into a memory provided in a function expansion card installed in the computer or a function expansion unit connected to the computer. In such a case, a CPU or the like provided in the functionality expansion card or the functionality expansion unit performs part or all of the actual processing based on the instructions of the program code, and the functionality of the aforementioned embodiment is realized by that processing.

While the present invention has been described with reference to an exemplary embodiment, it is to be understood that the invention is not limited to the disclosed exemplary embodiment. The scope of the following claims is to be accorded the broadest interpretation so as to encompass all such modifications and equivalent structures and functions.
An information processing apparatus that processes a digital document having a hierarchical structure through a workflow made up of at least one process, according to the order of the processes of the workflow. The apparatus includes a generation unit that generates structural elements that make up the digital document in association with the respective processes that make up the workflow; a storage unit that stores results of the processes that make up the workflow in the structural elements corresponding to the respective processes; and a referring unit that refers to the results of the respective processes stored by the storage unit, from the root of the hierarchical structure of the digital document.

## Claims

1. An information processing apparatus that processes a digital document having a hierarchical structure based on processes that make up a workflow, the apparatus comprising:
a generator configured to generate structural elements that make up the digital document in association with the respective processes that make up the workflow;
a storage configured to store results of the processes that make up the workflow in the structural elements corresponding to the respective processes; and
a referring unit configured to refer to the results of the respective processes stored by the storage, from the root of the hierarchical structure of the digital document.

2. The information processing apparatus according to claim 1, wherein the storage further stores a structural element in which an order of the processes that make up the workflow is denoted.

3. The information processing apparatus according to claim 1, further comprising a snapshot storage configured to generate and stores a structural element that stores the results of the respective processes of the workflow as a snapshot.

4. The information processing apparatus according to claim 1, further comprising an attribute storage configured to store attributes indicating properties of the respective processes of the workflow in structural elements corresponding to the respective processes.

5. The information processing apparatus according to claim 1, further comprising a job ticket storage configured to store job tickets corresponding to the processes that make up the workflow in structural elements corresponding to the processes.

6. The information processing apparatus according to one of claims 1 to 5, further comprising an electronic signature storage unit configured to store electronic signatures corresponding to the processes that make up the workflow in structural elements corresponding to the processes.

7. The information processing apparatus according to claim 1, wherein when the processing of the workflow is advanced from the currently-executed process to the next process, the storage copies the results of the currently-executed process stored in the structural element and stores those results in the structural element corresponding to the next process.

8. An information processing method that processes a digital document having a hierarchical structure based on processes that make up a workflow, the method comprising the steps of:
generating structural elements that make up the digital document in association with the respective processes that make up the workflow;
storing results of the processes that make up the workflow in the structural elements corresponding to the respective processes; and
referring to the results of the respective processes stored in the structural elements, from the root of the hierarchical structure of the digital document.

9. A computer program for causing a computer to execute an information processing method that processes a digital document having a hierarchical structure based on processes that make up a workflow, said method comprising:
generating structural elements that make up the digital document in association with the respective processes that make up the workflow;
storing results of the processes that make up the workflow in the structural elements corresponding to the respective processes; and
referring to the results of the respective processes stored in the structural elements, from the root of the hierarchical structure of the digital document.

10. An information processing apparatus comprising:
a setting unit configured to set process setting information including processes and a process order of the processes;
a generator configured to generate structural elements that make up document data in association with the respective processes that make up a workflow; and
a changer configured to change the reference destinations of the structural elements generated by the generator unit in accordance with the process setting information.

11. An information processing method comprising the steps of:
setting process setting information including processes and a process order of the processes;
generating structural elements that make up document data in association with the respective processes that make up a workflow; and
changing the reference destinations of the structural elements generated in the step of generating in accordance with the process setting information.

12. A computer program for causing a computer to execute an information processing method, the method comprising:
setting process setting information including processes and a process order of the processes;
generating structural elements that make up document data in association with the respective processes that make up a workflow; and
changing the reference destinations of the structural elements generated in the step of generating in accordance with the process setting information.
